Europäisches Patentamt

European Patent Office

Office européen des brevets

(11) Publication number: **0 486 721 A1**

# EUROPEAN PATENT APPLICATION

(21) Application number: 90122307.3

(22) Date of filing: 22.11.90

(51) Int. Cl.⁵: **B29D 30/42**

(43) Date of publication of application:
27.05.92 Bulletin 92/22

(84) Designated Contracting States:
DE ES FR GB GR

(71) Applicant: **PIRELLI COORDINAMENTO PNEUMATICI Società per Azioni**
**Piazzale Cadorna, 5**
**I-20123 Milan(IT)**

(72) Inventor: **Pizzorno, Augusto**
**Via Chopin, 31**
**I-Milan(IT)**

(74) Representative: **Giannesi, Pier Giovanni et al**
**Pirelli S.p.A. Direzione Brevetti Piazzale Cadorna, 5**
**I-20123 Milano(IT)**

(54) A device for measuring the joining overlap between two lengths of rubberized fabric in the manufacture of vehicle tyres.

(57) The device comprises an assembly of sensor laminations 7 disposed parally in side by side relation, slidably accommodated in a box-shaped housing structure 8 and provided at the lower part thereof with respective sensing ends 7a facing a slide surface along which lengths 4 of rubberized fabric consecutively spliced at the respective ends move forward step by step. The laminations 7 are passed through by a thrust bar 10 oscillatably engaging them in a vertical direction. A framework 13 vertically movable upon command of a fluid-operated cylinder 16 acts upon the box-shaped housing structure 8 and the thrust bar 10 for lowering the laminations 7 thereby bringing the sensing ends 7a thereof in thrust relation on the junction area 5 of the lengths 4. A telecamera 19 executes a reading on locating ends 7b carried by the laminations 7 at the upper part thereof, for measuring the joining overlap 5 width of the lengths based upon the number of laminations 7 that, acting upon the overlap itself, keep a raised position relative to the other laminations 7 acting on the single lengths.

EP 0 486 721 A1

# A DEVICE FOR MEASURING THE JOINING OVERLAP BETWEEN TWO LENGTHS OF RUBBERIZED FABRIC IN THE MANUFACTURE OF VEHICLE TYRES

The present invention relates to a device for measuring the joining overlap between two lengths of rubberized fabric in the manufacture of vehicle tyres, of the type comprising: a slide surface along which lengths of rubberized fabric consecutively spliced at the respective ends which are partly superposed so as to define an overlapped portion of predetermined width are moved on, step by step; detection means designed to operate on the junction area of the length ends in order to measure the overlap width in the direction of the longitudinal extension of the lengths.

In greater detail, the device in reference is designed to be used in the production of manufactured articles to be employed for making tyres of the so-called "radial type". Obviously, the innovative solutions of the invention may be also employed for the accomplishment of manufactured articles intended for different uses than those set forth above.

It is known that in the manufacture of radial tyre carcasses the manufactured articles to be used substantially consist of a cylindrical sleeve formed from a continuous strip of rubberized fabric comprising a series of threads oriented perpendicularly to the longitudinal extension of the strip and incorporated in a layer of elastomeric material interlacing said threads with one another.

These manufactured articles are obtained through the execution of several workings, starting from a ply of rubberized fabric the threads of which are oriented lengthwise. In greater detail, this ply is submitted to a transverse splitting operation so as to obtain portions of predetermined length that are subsequently joined to each other in order to give rise to said continuous strip with the threads oriented in a transverse direction.

The joining of the lengths is executed automatically by means of devices (see Italian Patent No. 1,063,614) that carry out the superposition of one end of a split length on the free end of the length cut in the preceding step. These devices also perform the function of making the joining of the spliced lengths firm, by a localized pressing action on the junction area, as a result of which the cohesion of the elastomeric material interlacing the threads of the single lengths is achieved.

It is to be noted that the operation of joining the length ends together is rather delicate and must be executed with the greatest accuracy. This is due to the fact that the overlap width of the superposed end edges must be as limited as possible in order to prevent the unavoidable discontinuity created by the overlap on the strip structure from producing undesired effects on the finished tyre.

At the same time the overlap must be wide enough to ensure the firm and efficient union of the spliced lengths.

Practically, the joining of the length ends must be carried out so that each of them should have no more than three and no less than two superposed threads at the end of the other length.

I is apparent that, in order to ensure that the junction may take place in the prescribed manner, the apparatus intended for the automatic execution of this operation should be associated with detecting devices capable of measuring the overlap width at each junction and signalling the presence of any faults while also commanding the interruption of the splitting and splicing workings, where necessary.

However, since the above detecting devices are not yet available on the market, the quality control of the junction is carried out statistically, on samples, by stopping the automatic splicing apparatus at intervals or periodically and checking the splice that has just been done.

In addition, in order to avoid the risks of a junction having a reduced width, a splice of greater width than the one closely necessary is tolerated.

Unfortunately in this manner not only the quality level of the finished tyres is adversely affected by this too great a width, but it is apparent that unacceptable junctions can escape the control and therefore they inevitably become part of a tyre that will then be discarded at the final quality control, which involves economical damages due to the amount of work, energy and raw materials uselessly squandered. The solution of the above problem is however very hard.

In fact, if one wants to read the overlap width by operating in the region of the upper surface of the strip, difficulties arise due to the fact that only the beginning of the overlap can be seen and not the end; in other words, only the front edge of the overlapping length can be seen and not the rear edge of the overlapped length.

Then, if one wants to read the overlap width by simultaneously operating on both the strip surfaces so as to be able to see both said front and rear ends, new difficulties arise due to the fact the the measurement must be done while the strip is moving, and it is necessary to relate the speed of the strip to the time elapsing between the detections of the two edges.

First of all the strip speed is of the pulsed type (a very high starting acceleration followed by an almost immediate stopping) and therefore the detection is lacking in accuracy, and secondly the sensor located at the lower surface of the strip gives rise to difficulties at the mounting and is subjected to reading faults by effect of the dust or other impurities that can lay thereon owing to its location.

Finally, if we think of carrying out the overlap reading at the strip edges, it is first of all to be noted that it is a question of reading the width of a "step" which is one millimeter high (corresponding to the thickness of the rubberized fabric) and extends across a strip the length of which can reach and even exceed the value of 1400 millimeters.

In spite of that, attemps have been made for carrying out said detection by means of devices essentially consisting of an appropriate telecamera trained on one of the side edges of the strip formed with spliced lengths. Trained on the opposite side edge of the strip is a light source projecting the profile of the joining overlap that is passing before the telecamera on a reading screen being part of the telecamera itself.

Associated with the telecamera is an electronic control box reading the overlap width depending upon the sizes of the shadow projected on the reading screen. In greater detail, a given amount of homogeneously distributed pixels is defined on the reading screen, a part of which is darkened by the above shadow. Based upon the number of darkened pixels corresponding to the projected shadow area, it is possible to go back to the overlap width.

However, this device too has given rise to some problems making it unacceptable.

First of all, in order to enable the reading system to operate with a certain degree of reliability it is necessary that the joining edges of the lengths be oriented in a manner perfectly parallel to the axis of the telecamera lens. If this condition does not occur, the overlap shadow projected on the reading screen is anavoidably wider than the actual width of the overlap itself. In this case even a correct splice is detected as a faulty one. In addition, the experimented reading system is not capable of recognizing whether the mutually spliced end edges extend parallelly to each other or an undesired divergency exists between said edges.

If the length edges are spliced in a correct manner close to one of the strip sides but they undesirably diverge in the direction of the other side, the shadow projected towards the telecamera is univocally that relating to the area spliced in a correct manner. In this case, therefore, it will be impossible to detect the fault in the splice.

The reading of the overlap width is also remarkably affected by the conformation taken by the length areas which are the closest to the overlap. In greater detail, the end edge of the length superposed on the contiguous length is necessarily raised from the slide surface. As a result, the length portion immediately following the overlap is forced to extend in an inclined manner in order to unite the overlap itself to the remaining part of the length resting on the slide surface. This sloping portion can take a more or less marked inclination depending upon the cases, and consequently the shadow projected by the same is each time different. It is apparent that in this case the reading of the overlap width is unavoidably imprecise.

In addition, at some points on the length both close to the junction area and far therefrom, creases and/or undulations and/or wrinklings can be accidentally created and they may be erroneously interpreted by the reading system as junctions having too wide an overlap.

Finally, mounting the lamp and telecamera flush with the slide surface of the rubberized fabric strip involves non negligible construction complications.

In the light of the foregoing, the main object of the present invention is to solve the above problems by providing a measurement device of simple construction, offering good efficiency and reliability at the detection and during normal operating conditions.

The foregoing and further objects that will become more apparent in the course of the present description are substantially attained by a device for measuring the joining overlap between two lengths of rubberized fabric in the manufacture of vehicle tyres, characterized in that said detection means comprises: at least an assembly of sensor laminations disposed vertically and pack-wise in side by side relation one after the other according to a direction substantially at right angles to the end edges of the spliced lengths, said laminations exhibiting respective sensing ends facing the slide plane and respective locating ends such arranged that they are mutually aligned when the sensing ends are disposed in coplanar relation; at least a thrust bar oscillatably engaging the laminations in a substantially vertical direction; actuator means acting on the thrust bar so as to bring the laminations from a rest position in which they are raised from said lengths, to an operating position in which they exhibit their own sensing ends in thrust relation on the junction area of two contiguous lengths; read means operating on said locating ends for measuring the overlap width based upon the amount of laminations that, acting upon the overlap itself in the operating condition, appear slightly raised relative to those operating on the single lengths.

Further features and advantages will best be understood from the detailed description of a device for measuring the joining overlap between two ply lengths in the manufacture of vehicle tyres in accordance with the present invention, given hereinafter by way of non-limiting example with reference to the accompanying drawings, in which:

- Fig. 1 is a fragmentary perspective view of the device in reference while the joining overlap is being measured;

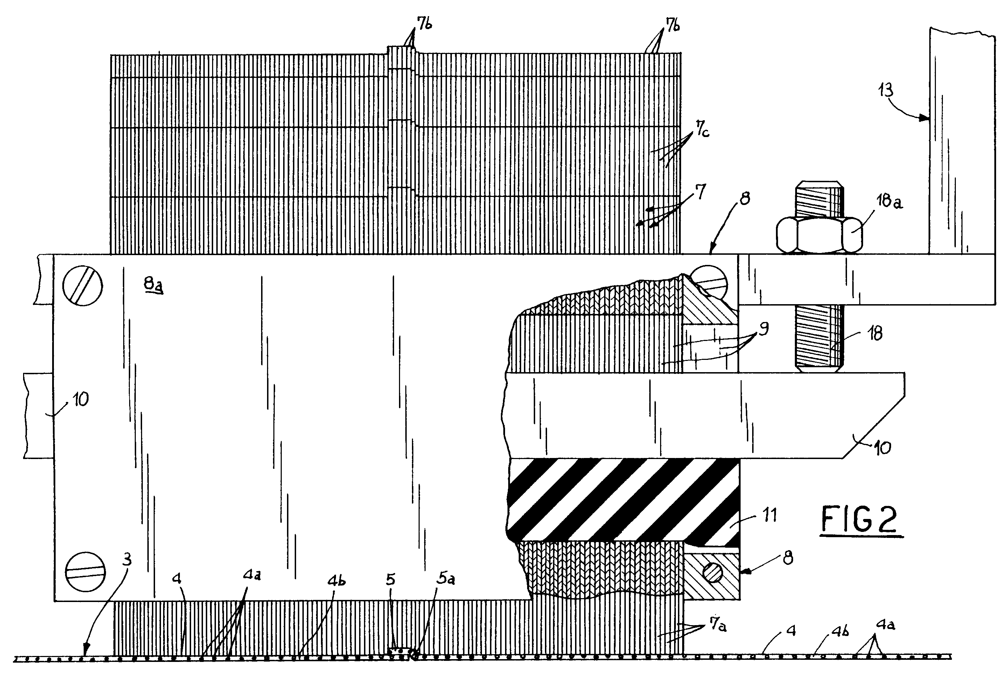

- Fig. 2 is a fragmentary front view to an enlarged scale of a plurality of sensor laminations being part of the device in reference during the measurement of a joining overlap.

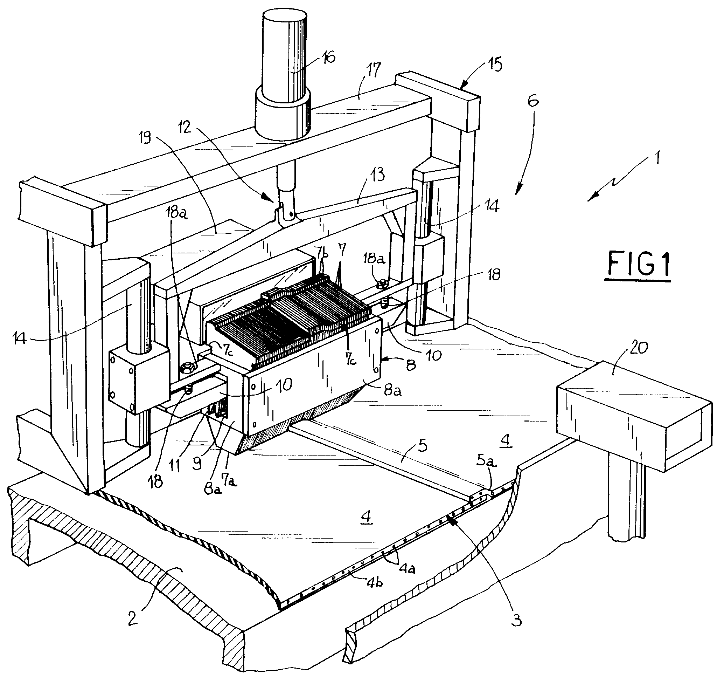

Referring particularly to Fig. 1, reference numeral 1 generally denotes a device for measuring the joining overlap between two ply lengths in the manufacture of vehicle tyres in accordance with the present invention.

The device 1 conventionally comprises a slide surface 2 along which a rubberized fabric strip 3 is moved on, preferably in the known step-by-step manner, said strip consisting of a number of lengths 4 (only two of which are partially shown) consecutively spliced at the respective ends. In greater detail lengths 4, essentially comprised of a number of transversely oriented threads spaced apart from each other by a constant distance and interlaced by a layer of elastomeric material 4b, have the respective opposite ends mutually superposed so as to form an overlap 5 of predetermined width. The overlap 5 width is preferably in the range of twice or three times the distance by which threads 4a are separated from one another.

Associated with the slide surface 2 are detecting means, generally identified by 6, designed to operate on the junction area of the number of lengths 4 in order to measure the overlap 4 width in the direction of the longitudinal extension of the lengths themselves.

In accordance with the present invention, these detecting means 6 are comprised of at least an assembly of sensor laminations 7 disposed upright and in side by side relation so as to form a pack, according to a direction substantially perpendicular to the end edges of the spliced lengths.

In the embodiment shown where the edges of the length ends are oriented at right angles to the longitudinal extension of the strip 3, the laminations 7 are aligned according to the longitudinal extension of the strip.

The laminations 7, slidably accommodated in a box-shaped housing box 8 defined by four plates 8a disposed so as to form a rectangular configuration, are provided at the lower part thereof with respective sensing ends 7a facing the slide surface 2 as well as, at the upper part thereof, with respective locating ends 7b. The locating ends 7b are so arranged that when the sensing ends 7a are located in the same plane they are mutually aligned.

Preferably laminations 7 have a downwardly tapering shape so that they become narrower towards the respective sensing ends 7a, for the purpose of suitably reducing the contact surface between each individual lamination 7 and the lengths 4 when the device 1 is in operation. By virtue of said tapering shape, the risk that the positioning of the laminations may be affected by creases or wrinklings possibly present on the lengths is reduced.

Each lamination 7 also has a tapering shape at the upper part thereof so that its upper edge is partly sloping relative to a horizontal plane, and this for the purpose of suitably reducing the extension of the locating end 7b, thereby restraining the risks of read faults due to any imprecise alignment of the telecamera.

In the embodiment shown, laminations 7 are also provided, at the upper part thereof, with opposite-facing side projections 7c that lend themselves to come into contact with the upper edges of the box-shaped housing structure 8.

The whole assembly of laminations 7 and the box-shaped housing structure 8 are entirely passed through, at respective shaped openings 9, by a thrust bar 10 to which the laminations 7 are engaged in a vertically oscillatable manner. Preferably, also extending through the shaped openings 9, underneath the thrust bar 10, is at least a spring element 11 made of rubber or another elastomeric material, designed to operate between the thrust bar and the laminations 7, as will be clarified in the following.

The device 1 further comprises actuator means 12 designed to vertically move the laminations from a rest condition in which they are raised from the lengths 4 to an operating condition in which, as clearly shown in the drawings, they have their sensing ends 7a in thrust relationship on the junction area of said lengths.

This actuator means 12 comprises a framework 13 fixedly engaging the box-shaped housing structure 8 and slidably guided in a vertical direction along two pillars 14 being part of a fixed structure 15 rigidly connected to the slide surface 2. The framework 13 is submitted to the action of a fluid-operated cylinder 16 or similar means, mounted to a crosspiece 17 being part of the fixed structure 15 as well.

The fluid-operated cylinder 16 is capable of moving the framework 13 from one position in which the laminations 7 keep the rest condition to a second position in which said framework 13 acts upon the thrust bar 10 in order to keep the laminations 7 in the operating condition. Preferably, the framework 13 acts on the opposite ends of the thrust bar 10 by two threaded adjustment pins 18 provided with respective set nuts 18a. The individual axial positioning of the adjustment pins 18 can be set after unloosing the respective set nut 18a, so as to vary the load transmitted to the laminations 7 by the spring element 11 in the operating conditions.

The device 1 finally comprises read means operating on the locating ends 7b for measuring the overlap 5 width based upon the amount of laminations that, acting by the respective sensing ends 7a on the overlap itself, appear slightly raised with respect to those only acting on the lengths without coming into contact with the overlap.

Preferably the read means is substantially comprised of a conventional telecamera 19 located behind the locating ends 7b and with which a light source 20 facing the locating ends and disposed in front of the telecamera itself, is associated.

The structure and operation of the telecamera 19 and light source 20 are known per se and anyway they have already been illustrated and will not be further described herein. However attention is drawn to the fact that telecamera 19 is provided with an electronic control box capable of evaluating the shadow area projected on its receiving screen by the locating ends 7b of the laminations that in the operating condition are slightly raised relative to all the other laminations being part of the same assembly.

Operation of the device according to the invention described above mainly as regards structure, is as follows.

As previously said, the strip 3 formed with the consecutively spliced lengths 4 is moved forward on the slide surface 2 following a step-by-step movement so that at each stop period the joining overlap 5 between two consecutive lengths 4 is disposed underneath the assembly of laminations 7 that are initially raised in a rest condition.

In concert with the translation stopping of the strip 3, the fluid-operated cylinder 16 is operated and, through the framework 13 and the box-shaped housing structure 8, it triggers the lamination 7 descent so that the sensing ends 7a thereof are brought into contact with the lengths 4 in the junction area between the same.

Close to the end portion of the fluid-operated cylinder stroke, and therefore of the framework 13 and box-shaped housing structure 8, the adjustment pins 18 abut against the thrust bar 10 which had been till that moment merely resting, through the spring element 11, on the base of the openings 9 formed through the laminations 7. It is to be pointed out that the forces transmitted to the thrust bar 10 are equally distributed on each lamination 7 through the spring element 11 so that the sensing end 7a of each lamination exerts a given pressure onto the strip surface.

Under this situation, the lengths 4 can conveniently adhere to the slide surface 2 at the areas overlying the lamination pack 7, so as to smooth creases or wrinklings that may be present on the lengths at the junction area. Pressure exerted by the laminations 7 also greatly reduces the width of the union area, identified by 5a, between the overlap 5 and the remaining part of the length 4 the end of which is superposed to the end of the other length.

Under this situation, the laminations 7 the sensing ends 7a of which act on the overlap 5 are slightly raised with respect to all the other laminations the sensing ends of which are substantially located in one and the same plane. As a result, the locating ends 7b of each lamination 7 exactly reproduce all together the surface outline of the lengths 4 at the junction area, and in particular the overlap 5 outline.

In known manner, the shadow of the profile reproduced by the locating ends 7b will be projected, by effect of the light source 20, on the reading screen of the telecamera 19, by which the overlap width will be detected in order to check whether the value thereof is within the predetermined parameters.

The present invention attains the intended purposes. In fact, the device in question is capable of carrying out the reading of the overlap width by operating on a localized area of the splice where, by effect of the pressure exerted by laminations 7, any creases and wrinkles present on the lengths are eliminated, being also greatly reduced the width of the union portion 5a existing close to the overlap 5. Obviously this brings about an improved reading accuracy as compared with the known art.

In addition, since the reading is carried out in a localized area of the splice, there is also the elimination of problems arising when shadows of possible creases or wrinklings present in the other areas of the lengths close to the overlap are undesirably projected on the telecamera screen. Still for the same reason there is no longer the possibility of read faults if the line joining the lengths is not disposed perfectly in alignment with the telecamera lens.

If the localized reading is carried out in the middle region of the strip width, it also greatly reduces the possibilities that, as previously said, a junction fault may not be detected when the end edges are not disposed in a perfectly parallel manner. These possibilities can be practically reduced to zero if two lamination assemblies, provided with respective telecameras and respectively acting close to the opposite sides of the strip 3 are used.

In conclusion, the device in question is of easy construction and mounting, and reliable both in detecting the junction area and in operation, mainly due to the fact that it carries out the reading in a conveniently selected area, different from the overlap area (that is at the upper surface of the laminations instead of directly flush with the slide surface) and the detection occurs on a stationary strip and not on a movable one, by suitably using the strip stopping time necessary for the automatic carrying out of a new splice, upstream of the device itself.

Obviously, modifications and variations can be made to the invention as conceived, all of them falling within the scope of the inventive idea characterizing it.

## Claims

1. A device for measuring the joining overlap between two lengths 4 of rubberized fabric in the manufacture of vehicle tyres, comprising a slide surface 2 along which lengths of rubberized fabric consecutively spliced at the respective ends which are partly superposed so as to define an overlapped portion 5 of predetermined width are moved on, step by step, characterized in that it comprises detection means 6 designed to operate, at one surface only of said strip and while the strip is stationary, on a junction area of said length ends in order to measure the overlap width in the direction of the longitudinal extension of the lengths.

2. A device according to claim 1, characterized in that said detection means comprises:
- at least an assembly of sensor laminations 7 disposed vertically and pack-wise in side by side relation one after the other according to a direction substantially perpendicular to the end edges of the spliced lengths 4, said laminations being provided with respective sensing ends 7a facing the slide surface and respective locating ends 7b such arranged that they are mutually aligned when the sensing ends are disposed in coplanar relation;
- at least a thrust bar 10 oscillatably engaging the laminations in a substantially vertical direction;
- actuator means 12 acting on the thrust bar so as to bring the laminations from a rest position in which they are raised from said lengths, to an operating position in which they exhibit their sensing ends in thrust relation on the junction area between two contiguous lengths;
- read means 19 acting on said locating ends for measuring the overlap width based upon the amount of laminations that, by acting on the overlap 5 in the operating condition, appear slightly raised with respect to those acting on the single lengths.

3. A device according to claim 1, characterized in that said actuator means comprises a box-shaped housing structure 8 accommodating the laminations 7 so that they can oscillate in a vertical direction, a framework 13 slidably guided vertically on a fixed bearing structure 15 and at least a fluid-operated cylinder 16 acting upon said framework so as to bring it from one position in which the laminations are sustained in a rest condition, to a second position in which said framework acts upon the thrust bar so as to push the laminations against the lengths in the operating condition.

4. A device according to claim 1, characterized in that it further comprises at least a spring element 11 operating between the thrust bar 10 and the laminations and designed to distribute the forces transmitted by the bar 10 in the operating condition, to the laminations.

5. A device according to claim 1, characterized in that said laminations 7 are downwardly tapered so as to reduce the contact surface of the sensing ends 7a on the lengths.

6. A device according to claim 1, characterized in that said laminations 7 are tapered at the upper part thereof so as to reduce the width of the locating ends 7b.

7. A device according to claim 3, characterized in that said laminations 7 are provided at the upper part thereof with respective side projections 7c designed to abut against the upper edges of the box-shaped housing structure 8.

8. A device according to claim 3, characterized in that operatively mounted on the framework 13 are at least two threaded adjustment pins 18 designed to operate in abutment relation on the opposite ends of the thrust bar so as to urge it downwardly when the framework 13 is brought to the second position, wherein said threaded pins can be positioned in a vertical direction for adjusting the thrust force exerted on the laminations 7 in the operating condition.

9. A device according to claim 1, characterized in that said read means comprises at least a telecamera 19 facing the locating ends 7b of the laminations 7 and at least a light source 20 disposed in front of the telecamera.

10. A device for measuring the joining overlap between two lengths 4 of rubberized fabric in the manufacture of vehicle tyres, according to the previous claims and to what has been described and illustrated, for the scope declared.

FIG 1

FIG2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 141 805 (B. A. GOUGH ET AL.) <br> * column 4, line 49 - column 6, line 23; figures 1-10 * <br> --- | 1,10 | B29D30/42 |
| X | US-A-3 253 489 (P. A. PHILLIPS) <br> * column 5, line 25 - line 47; figures 1-10 * <br> --- | 1,10 | |
| A | PATENT ABSTRACTS OF JAPAN <br> vol. 7, no. 249 (P-234)(1394) 5 November 1983 <br> & JP-A-58 135 406 ( KINJI KITADA ) 12 August 1983 <br> * abstract; figures 1-4 * <br> --- | 1,2,4,9, 10 | |
| A | PATENT ABSTRACTS OF JAPAN <br> vol. 7, no. 125 (P-200)(1270) 31 May 1983 <br> & JP-A-58 041 303 ( NISSAN JIDOSHA K. K. ) 10 March 1983 <br> * abstract; figures 1,2 * <br> --- | 1,2,9,10 | |
| A | FR-A-480 769 (J. VAN DER HOEVEN LEONHARD) <br> * the whole document * <br> --- | 1-3,10 | TECHNICAL FIELDS SEARCHED (Int. Cl.5) |
| A | EP-A-0 325 295 (THE FIRESTONE TIRE & RUBBER CO.) <br> * column 3, line 51 - column 5, line 10; figures 1,5 * <br> --- | 1-4,7,10 | B29D <br> B29C <br> G01B |
| A | US-A-2 955 640 (F. K. BARNS) <br> * column 2, line 60 - column 3, line 44 * <br> * column 4, line 33 - line 70 * <br> * figures 1-8 * <br> ----- | 1-5,7,10 | |

The present search report has been drawn up for all claims

| Place of search | Date of completion of the search | Examiner |
|---|---|---|
| THE HAGUE | 14 FEBRUARY 1992 | FREGOSI A.M. |

EPO FORM 1503 03.82 (P0403)